# EUROPÄISCHE PATENTSCHRIFT

(11) **EP 2 378 422 B1**
(45) Veröffentlichungstag und Bekanntmachung des Hinweises auf die Patenterteilung: **05.09.2012**
(21) Anmeldenummer: 11002428.8
(22) Anmeldetag: 24.03.2011
(51) Int. Cl.: G06F 9/48, H04L 29/06

(54) **Verfahren und System zur Übertragung von Daten**
System and method for transport of data
Système et procédé pour la transmission des dates

(30) Priorität: 14.04.2010 DE 102010014829
(43) Veröffentlichungstag der Anmeldung: 19.10.2011
(73) Patentinhaber: Deutsche Telekom AG, 53113 Bonn (DE)
(72) Erfinder: Trinkel, Marian, 52372 Kreuzau OT Untermaubach (DE); Daussmann, Frank, 67454 Hassloch (DE)

(56) Entgegenhaltungen:
- US-A1- 2007 079 307
- US-A1- 2008 222 309
- US-B1- 7 484 208

## Beschreibung

Die Erfindung betrifft ein Verfahren zur Übertragung von Daten von einem Startserver zu einem Zielserver über mehrere Transportserver eines Telekommunikationsnetzwerks, insbesondere des Internets, wobei die zu übertragenden Daten im Startserver in eine virtuelle Maschine integriert werden und die virtuelle Maschine zusammen mit den darin integrierten Daten über die Transportserver bis zum Zielserver transportiert wird, wobei während des Transports in zumindest einem Transportserver die virtuelle Maschine zumindest zeitweise mittels der Hardware des aktuellen Transportservers ausgeführt und nach der Ausführung angehalten oder abgebrochen und weitergesendet wird bis dass die virtuelle Maschine vom Zielserver empfangen wird und wobei als zu übertragende Daten mit dem Startserver Startdaten in die virtuelle Maschine integriert werden, die durch die virtuelle Maschine in einem Wandlungsprozeß in Zieldaten gewandelt werden, wobei auf jedem der Transportserver, der die virtuelle Maschine ausführt, während der Ausführungszeit der virtuellen Maschine der Wandlungsprozeß teilweise ausgeführt wird. Die Erfindung betrifft weiterhin ein System zur Übertragung von Daten, insbesondere welches eingerichtet ist, vorgenanntes Verfahren auszuführen.

Im Stand der Technik ist es allgemein bekannt, jegliche Arten von Daten von einem Startserver zu einem Zielserver über ein Telekommunikationsnetzwerk, wie beispielsweise das Internet, zu versenden. Bei diesen Daten kann es sich z.B. um übliche Kommunikationsdaten handeln, wie sie beispielsweise bei der Versendung von e-mails verwendet werden und hierbei im Wesentlichen durch Klartext repräsentiert werden, ebenso wie die an e-mails angehängten Dateianhänge. Ebenso können jegliche andere Daten über grundsätzlich jedes zur Datenkommunikation verwendete Protokoll über ein Telekommunikationsnetzwerk versendet werden. Dabei ist es ebenso bekannt, dass besonders dann, wenn Startserver und Zielserver nicht durch eine singuläre, insbesondere Standleitung miteinander verbunden sind, der Transport der Daten zwischen diesen beiden Servern unter Zuhilfenahme mehrerer Transportserver des Telekommunikationsnetzwerkes erfolgt. So macht sich der Datentransport hier die im Wesentlichen globale Vernetzung einer Vielzahl von Transportservern zu nutze, um so auf einem Transportweg, der über eine Vielzahl solcher Transportserver des Telekommunikationsnetzes führt, im Wesentlichen jeden beliebig auf der Welt lokalisierten Zielserver von einem ebenso beliebig lokalisierten Startserver zu erreichen.

Gerade aufgrund der benannten Globalisierung und dem hierdurch hervorgerufenen Einsatz von einer Vielzahl von Transportservern, um die Daten vom Startserver zum Zielserver zu übermitteln, ergibt sich die Problematik, dass über den Transportweg hinweg sich eine Vielzahl von Angriffsmöglichkeiten durch unbefugte Dritte ergibt, die gegebenenfalls ein Interesse daran haben, die versendeten Daten abzugreifen, zu manipulieren oder für eigene, unbefugte Zwecke zu missbrauchen. Im Rahmen eines solchen Missbrauchs können beispielsweise die versendeten Daten ausgespäht werden, beispielsweise, wenn es sich um vertrauliche Bankdaten handelt und sodann zu den unbefugten Zwecken eingesetzt werden. Ebenso können die Daten durch Veränderung oder auch durch Hinzufügung manipuliert werden, um auf der Empfängerseite, somit insbesondere beim Zielserver, einen Schaden zu erzeugen, wenn dort die Daten empfangen werden.

In einem solchen Zusammenhang ist es beispielsweise bekannt, an versendete Daten sogenannte Viren anzuhängen, die auch allgemein als Schadsoftware bezeichnet werden können und die sodann auf dem Zielserver durch den Zugriff auf die empfangenen Daten aktiviert werden und zu einer Schädigung führen können. Neben solchen Viren können auch schadhafte Programme an die Daten angehängt werden, mit denen Aktivitäten auf dem Zielserver ausgespäht werden können, beispielsweise um so aus den ausgespähten Aktionen wiederum Informationen für einen eventuellen Missbrauch zu erhalten. Ein typisches Beispiel ist das Einschleusen sogenannter Trojaner durch den Empfang von Daten, um sodann vertrauliche Informationen auf dem Zielserver auszuspähen.

Um Daten während einer Übertragung über ein Telekommunikationsnetzwerk von einem Startserver zu einem Zielserver zu schützen, ist es bekannt geworden, Verschlüsselungssysteme einzusetzen, bei denen unter Zuhilfenahme eines oder mehrerer Schlüssel die Daten vor der Versendung verschlüsselt und nach dem Empfang entschlüsselt werden. Dies schützt zwar gegebenenfalls davor, den Inhalt der Daten auszuspähen, sofern der Verschlüsselungsmechanismus tatsächlich sicher ist, schützt jedoch nicht davor, mit dem Empfang der verschlüsselten Daten zusätzlich auch Schadsoftware im oben beschriebenen Sinne zu empfangen, da diese selbstverständlich auch an verschlüsselte Daten angehängt werden kann.

Weiterhin ist ein gattungsgemäßes Verfahren und System der eingangs genannten Art bereits aus der Veröffentlichung US 2007/0079307 bekannt, welche die Integration von Daten in virtuelle Maschinen beschreibt, ebenso wie das Bearbeiten der Daten, z.B. durch Verschlüsselung innerhalb der virtuellen Maschine.

Es ist daher die Aufgabe der Erfindung, ein Verfahren der eingangs genannten gattungsgemäßen Art zur Übertragung von Daten von einem Startserver zu einem Zielserver über mehrere Transportserver eines Telekommunikationsnetzwerkes, wie beispielsweise das Internet, zu verbessern. Dabei ist es insbesondere die Aufgabe der Erfindung, einen Zielserver, welcher die Daten nach dem Transport über das Telekommunikationsnetzwerk empfängt, vor schadhaften, nicht autorisierten Eingriffen seitens Dritter zu schützen, d.h. hier insbesondere die Übertragung und den Empfang von Schadsoftware zu vermeiden. Ebenfalls ist es weiterhin die Aufgabe der Erfindung, eine sichere und manipulationsfreie Übertragung von Daten zwischen dem Startserver und dem Zielserver zu ermöglichen bzw. eine derartige Manipulation zumindest festzustellen.

Erfindungsgemäß wird diese Aufgabe dadurch gelöst, dass bei einem Verfahren der zuvor genannten gattungsgemäßen Art jeder Transportserver über die durchzuführende Wandlung informiert wird parallel zur Versendung oder vor der Versendung der virtuellen Maschine mittels einer Liste, in welcher für jeden Server die Art der Wandlung definiert ist.

Die Aufgabe wird weiterhin gelöst durch ein System, bei welchem jeder Transportserver über die durchzuführende Wandlung informiert ist durch eine parallel zur Versendung oder vor der Versendung der virtuellen Maschine versendete Liste, in welcher für jeden Server die Art der Wandlung definiert ist.

Der wesentliche Kerngedanke der hier beschriebenen Erfindung beruht somit darin, die zu übertragenden Daten nicht mehr unmittelbar, sei es verschlüsselt oder auch unverschlüsselt, zwischen den einzelnen beteiligten Servern des Telekommunikationsnetzwerkes zu versenden, sondern die zu übertragenden Daten in einer als virtuelle Maschine ausgebildete Umgebung, insbesondere einen als virtuelle Maschine ausgebildeten Datencontainer zu integrieren.

Dies allein hat bereits den Vorteil, dass unbefugte Dritte nicht unmittelbar an die zu übertragenden Daten Schadsoftware anhängen können oder auch auf die zu übertragenden Daten Zugriff nehmen können, da die zu übertragenden Daten nicht unmittelbar nach außen hin sichtbar sind, weil sie wie zuvor beschrieben in die als virtuelle Maschine ausgebildeten Umgebung integriert sind und somit während des Übertragungswegs im Wesentlichen nur die virtuelle Maschine - wenn überhaupt - erkennbar ist.

Unter einer virtuellen Maschine, in der Literatur auch kurz als VM bezeichnet, wird im Wesentlichen ein virtueller Computer verstanden, d.h. dass eine solche virtuelle Maschine nicht aus einer Hardware besteht, sondern rein aus einer Software, somit für sich alleine genommen demnach nicht lauffähig ist, sondern es eines physischen Computers bedarf, mittels dem eine solche virtuelle Maschine, gegebenenfalls auch mehrere gleichzeitig betrieben werden können.

Eine solche virtuelle Maschine kann demnach auf jedem physischen Computer, wie beispielsweise den zuvor genannten Startservern, Transportservern oder auch Zielservern ausgeführt werden, so als wäre die virtuelle Maschine ein tatsächlicher Computer. Dabei besteht grundsätzlich die Möglichkeit, dass eine solche virtuelle Maschine nativ auf dem jeweiligen Computer, insbesondere den zuvor genannten Servern, ausgeführt wird oder aber auch durch eine Emulation. Dies hängt maßgeblich davon ab, durch welche Software eine solche virtuelle Maschine realisiert ist und ob diese unmittelbar oder erst durch Emulation durch den oder die Prozessoren der im Übertragungsweg verwendeten Server ausgeführt werden kann. Dabei werden häufig virtuelle Maschinen als Betriebssystem ausgeführt, das nicht alleinig über den ausführenden Server verfügt oder es erfolgt eine Ausführung als sogenannte Laufzeitumgebung, die ein Modell eines Computers in Software darstellt.

Es besteht demnach erfindungsgemäß hier die Möglichkeit, die vom Startserver genutzte, gegebenenfalls hierfür erzeugte virtuelle Maschine mit den darin integrierten Daten auf jedem der während des Transportwegs verwendeten Server, also sowohl vom Startserver, von dem gegebenenfalls mehreren Transportservern sowie auch vom Zielserver auszuführen, so als sei der jeweilige ausführende Server ein Computer mit sämtlichen, in der virtuellen Maschine verankerten Eigenschaften.

Ein wesentlicher Vorteil einer virtuellen Maschine ist es dabei, dass eine solche virtuelle Maschine auf jedem Computer, auf welchem sie ausgeführt wird, wie beispielsweise den zuvor genannten Servern, neu gestartet wird oder aber die Ausführung der virtuellen Maschine fortgeführt wird von einem definierten Zustand, in welchem ein vorheriger Server, also Startserver, Transportserver oder Zielserver, die virtuelle Maschine angehalten hat. In gleicher Weise kann ein jeglicher, während des Transportwegs eingesetzter Server vor der Weiterversendung der virtuellen Maschine diese entweder anhalten, damit ein nächster Server sie ab dem Anhaltezeitpunkt fortführt oder aber auch abbrechen, damit ein nächster Server die virtuelle Maschine sodann neu startet.

Hieraus ergeben sich für das erfindungsgemäße Verfahren und zur sicheren Datenübertragung besondere Vorteile. So kann durch das Abbrechen einer virtuellen Maschine nach der Ausführung durch einen Transportserver und vor der Weiterversendung an den nächsten Transportserver oder auch den Zielserver sicher gestellt werden, dass aufgrund des danach erfolgenden Neustarts bei dem nächsten Transportserver bzw. Zielserver gegebenenfalls zwischenzeitlich erfolgte Manipulationen automatisch vernichtet werden, da durch den Neustart beim jeweils nachfolgenden Server die virtuelle Maschine jeweils von einem definierten Grundzustand aus neu gestartet wird, insbesondere der vor der Versendung durch den Startserver definiert wurde. So gehen demnach durch den jeweiligen Neustart bei jedem der Server während des Transportwegs, zumindest jedoch bei einem und insbesondere beispielsweise beim Zielserver, die zwischenzeitlichen Manipulationen verloren, so dass die Daten in einem Ursprungszustand empfangen werden, der dem zu Beginn der Versendetätigkeit durch den Startserver definierten Grundzustand der virtuellen Maschine entspricht.

Das Anhalten einer virtuellen Maschine nach der Ausführung durch einen Transportserver vor der Weiterversendung an einen nachfolgenden Transportserver bzw. zum Zielserver hat hierbei den weiteren Vorteil, dass gewünschte definierte Tätigkeiten der virtuellen Maschine während des gesamten Transportwegs fortwährend durchgeführt werden können und solche Tätigkeiten dazu dienen können, die Unversehrtheit der Daten während des Transportes zu sichern.

Die beiden zuvor beschriebenen Vorteile sowohl des Anhaltens als auch des Abbrechens einer virtuellen Maschine können beliebig miteinander kombiniert werden. So kann es beispielsweise vorgesehen sein, dass nicht jeder Transportserver eine virtuelle Maschine abbricht, so dass sie vom nächsten Transportserver neu gestartet werden muss, sondern dass dies nur einige Transportserver während des Transportweges, beispielsweise der letzte Transportserver vor dem Zielserver durchführt. Andere, die virtuelle Maschine nicht abbrechende Transportserver können diese beispielsweise lediglich die virtuelle Maschine anhalten, damit ein nachfolgender Transportserver oder Zielserver die virtuelle Maschine ab dem angehaltenen Zeitpunkt bzw. den durch das Anhalten definierten Zustand weiter ausführt.

In einer vorteilhaften Weiterbildung kann es vorgesehen sein, dass die virtuelle Maschine bereits während ihrer Ausführungszeit auf einem Transportserver die mit ihr übertragenen Daten auf Unversehrtheit überprüft. Dies kann beispielsweise dadurch erfolgen, dass eine virtuelle Maschine fortwährend eine Prüfsumme der zu übertragenden Daten generiert und mit einem gespeicherten Wert prüft oder auch dadurch, dass mittels eines Virenscanners der Befall der übertragenen Daten durch schadhafte Software, wie beispielsweise Viren oder Trojaner, überprüft wird. Wird ein solcher Befall festgestellt, so kann unmittelbar durch ein solches ausgeführtes Prüfprogramm der Befall durch die Schadsoftware eliminiert werden, so dass sich hierdurch bereits der Vorteil ergibt, die zu übertragenden Daten nicht erst am Zielserver überprüfen zu müssen und somit einen Zielserver bereits vor dem Einschleppen von Schadsoftware geschützt wird.

Erfindungsgemäß ist es vorgesehen, dass als zu übertragende Daten mit dem Startserver Startdaten in die virtuelle Maschine integriert werden, die durch die virtuelle Maschine in einem Wandlungsprozess in Zieldaten gewandelt werden, wobei auf jedem der Transportserver, insbesondere jedem, der die virtuelle Maschine ausführt, während der Ausführungszeit der virtuellen Maschine der Wandlungsprozess teilweise ausgeführt wird, insbesondere so, dass der Wandlungsprozess erst mit Empfang oder nach Empfang der virtuellen Maschine beim Zielserver abgeschlossen wird bzw. abgeschlossen ist.

Durch diese erfindungsgemäße Ausbildung wird eine weitere Sicherheit und Sicherung der zu übertragenden Daten dadurch erzielt, dass es sich bei den zu übertragenden Daten gar nicht erst um diejenigen Daten handelt, die beim Zielserver ankommen sollen, sondern um solche Daten, aus denen während des Transportwegs durch die Ausführung der virtuellen Maschine durch wenigstens einige der Transportserver diejenigen Daten, die vom Zielserver empfangen werden sollen, erst generiert werden.

So werden erfindungsgemäß die zu empfangenden Daten aus den zu übertragenden Daten gewandelt, so dass dementsprechend auch keine Möglichkeit besteht, die zu empfangenden Daten während des Transportwegs abzugreifen. Selbst wenn ein Abgriff der Daten durch unbefugte Dritte während des Transportwegs erfolgen sollten, so handelt es sich dann bei einem solchen Abgriff um Daten, mit denen der unbefugte Dritte nichts anfangen und somit keine Schädigung durchführen kann, da es sich bei den Daten ja schlicht nicht um diejenigen handelt, die der Zielserver empfangen soll. Aus diesem Grunde ist es besonders vorteilhaft, wenn die Abarbeitung der virtuellen Maschine während des Transportwegs derart gesteuert ist, dass aus den zu übertragenden Daten bzw. den Startdaten die zu empfangenden Daten bzw. die Zieldaten so gewandelt werden, dass sie erst durch einen letzten Wandlungsschritt im Zielserver generiert werden oder aber die Generierung der Zieldaten zumindest erst in einem solchen Transportserver abgeschlossen wird, welcher in der Übertragungskette der einzelnen verschiedenen Server nahe dem Zielserver angeordnet ist, insbesondere unmittelbar in der Übertragungskette vor diesem positioniert ist.

In einer Ausführungsform kann es auch vorgesehen sein, die mit einer virtuellen Maschine versendete Daten bei jeder Ausführung der virtuellen Maschine zu wandeln, so dass zu keinem Zeitpunkt des Transportes die tatsächlichen zu übertragenden Daten in der virtuellen Maschine vorliegen und dann mit dem Zielserver die empfangenen Daten, die aus den ursprünglichen während des Transportes gewandelt wurden, zurückzuwandeln und so die ursprünglichen Daten zu rekonstruieren. Hierfür kann dem Zielserver eine Information über die durchzuführende Rückwandlung bzw. Rücktransformation vorliegen, z.B. durch separaten Empfang dieser Information vom Startserver. Selbst wenn ein Abgriff der Daten während des Transportes stattfinden würde und selbst wenn ein unberechtigter Dritte die Information über die durchzuführende Rückwandlung hätte, wäre eine Rückwandlung nicht möglich, da die Wandlung erfindungsgemäß erst am letzten Transportserver oder am Zielserver abgeschlossen wird und somit erst die Rückwandlung beim Zielserver die ursprünglichen Daten wieder herstellt.

In einer anderen möglichen Ausführungsform, die ebenso mit jeder der zuvor genannten Ausführungsformen beliebig kombinierbar ist, kann es auch vorgesehen sein, dass unabhängig zur Übertragung der virtuellen Maschine mit den darin integrierten Daten an den Zielserver eine Zeitinformation entweder über die zu erwartende Gesamtausführungszeit oder die Gesamtübertragungszeit oder auch über beide Zeiten übermittelt wird, die während der Übertragung der virtuellen Maschine benötigt wird und sodann der Zielserver die Gesamtausführungszeit und/oder Gesamtübertragungszeit der virtuellen Maschine nach deren Empfang mit der erhaltenen Zeitinformation vergleicht.

So kann es beispielsweise vorgesehen sein, dass eine virtuelle Maschine bzw. eine darauf laufende Software derart eingerichtet ist, dass auf jedem der während des Transportes verwendeten Server, insbesondere der Transportserver, die virtuelle Maschine für einen bestimmten vordefinierten Zeitraum ausgeführt wird, so dass sich durch die mehrfache Ausführung der virtuellen Maschine über den gesamten Transportweg eine Gesamtausführungszeit ergibt, zusätzlich zu einer Übertragungszeit, die benötigt wird, um die virtuelle Maschine zwischen den einzelnen Servern über das Telekommunikationsnetzwerk zu versenden.

Hier kann es vorgesehen sein, dass durch den Startserver bzw. durch einen diesen Startserver programmierenden Nutzer die jeweiligen Ausführungszeiten der virtuellen Maschine auf jeden oder bestimmten Transportservern vorgegeben wird und dass die reine Übertragungszeit beispielsweise unmittelbar vor der Versendung der virtuellen Maschine mit den darin integrierten Daten festgestellt wird. So kann die Feststellung der reinen Übertragungszeit zwischen den einzelnen Servern vom Startserver zum Zielserver in einer beispielhaften Anwendung durch die Anwendung eines sogenannten Ping-Kommandos überprüft werden, welche zwischen Startserver und Zielserver die reine Transportzeit von Datenpaketen ermittelt. Diese reine Transportzeit kann unmittelbar vor der Versendung der virtuellen Maschine festgestellt werden, so dass hiermit festgelegt ist, dass am Zielserver eine Gesamtzeit verstrichen sein muss, die der Summe der benötigten Transportzeit plus der Summe der einzelnen Ausführungszeiten auf jedem Transportserver entspricht. Diese Zeitinformation kann parallel zu der virtuellen Maschine oder auch in dieser zwischen Startserver und Zielserver ausgetauscht werden, so dass der Zielserver nach Empfang dieser Zeitinformation in die Lage versetzt ist, diese erhaltene Zeitinformation zu vergleichen mit der Gesamtzeit, die vergangen ist seit dem Empfang der Zeitinformation durch den Startserver, welcher bevorzugt die Zeitinformation und die virtuelle Maschine zeitgleich bzw. zeitlich korreliert versendet.

Ebenso kann es in einer Ausführung vorgesehen sein, dass eine virtuelle Maschine während des Transportes über die einzelnen Transportserver lediglich angehalten und jeweils fortgeführt wird auf dem nachfolgenden Server und dass die virtuelle Maschine eine interne Uhr kontinuierlich fortschreibt, somit also ihre Gesamtausführungszeit protokolliert und dass diese Gesamtausführungszeit nach dem Empfang der virtuellen Maschine durch den Zielserver verglichen wird mit der beim Versenden der virtuellen Maschine durch den Startserver festgelegten Gesamtausführungszeit. Auch hier kann demnach eine Information aus dem Vergleich der beiden Zeiten erhalten werden, ob zwischenzeitlich eine Manipulation an der virtuellen Maschine stattgefunden hat, da diese in aller Regel zu einer verlängerten Gesamtausführungszeit führen muss. Die Überprüfung lediglich der Gesamtausführungszeit hat hierbei den Vorteil, dass eventuelle Unwägbarkeiten bei der zeitlichen Übertragung irrelevant sind, es somit also unkritisch ist, wenn eine Übertragung zwischen zwei Servern während des Transportwegs, insbesondere also zwischen den mehreren Transportservern mehr Zeit benötigt als ursprünglich angenommen.

Diese genannten Zeiten können mit Bezug auf die vorher genannte Ausführung auch verwendet werden, um als Parameter einer Rückwandlungsfunktion bzw. Rücktransformation zu dienen.

Bei dem erfindungsgemäßen Verfahren kann es auch vorgesehen sein, insbesondere um zeitliche Unwägbarkeiten wie zuvor beschrieben zu eliminieren, dass der Transportweg, der zwischen Startserver und Zielserver liegt, und somit durch die einzelnen Transportserver repräsentiert wird, nicht beliebig ist, sondern vorgeschrieben ist, beispielhaft lokaler, nationaler Cloud. So kann es beispielsweise bei der Übertragung der Daten innerhalb der virtuellen Maschine vorgesehen sein, dass zusammen mit der virtuellen Maschine eine Serverliste versendet wird, die angibt, auf welchem konkreten Transportweg diese virtuelle Maschine über das Telekommunikationsnetzwerk zum Zielserver zu versenden ist. Die einzelnen Transportserver, die während dieses Transportes benutzt werden sollen, können z.B. durch ihre jeweilige IP-Adresse, Kommunikationsadresse repräsentiert werden. Dabei kann in einer solchen, dem Versand beigefügten Information neben der Definition des Transportwegs auch festgelegt werden, welcher der einzelnen Transportserver die virtuelle Maschine ausführen und anhalten bzw. abbrechen soll.

Eine Serverliste der für den Transport zu benutzenden Transportserver kann z.B. als Datei oder ausführbarer Programmcode in die virtuelle Maschine integriert sein oder selber eine virtuelle Maschine sein oder vor der virtuellen Maschine versendet werden, so dass eine solche Liste bei den Transportservern bereits vorliegt, wenn diese eine virtuelle Maschine empfangen. Dabei kann eine Serverliste z.B. nur nationale oder lokale Transportserver gelistet haben, wodurch der Transportweg national begrenzt werden kann.

Erfindungsgemäß ist es vorgesehen, dass die durchzuführende Transformation bzw. Wandlung nicht innerhalb der virtuellen Maschine gespeichert ist, sondern die einzelnen Transportserver, insbesondere durch vorherige Unterrichtung, informiert sind, welche Transformation bzw. Wandlung sie jeweils durchzuführen haben. In einer Serverliste kann somit nicht nur enthalten sein, welcher Transportserver in der Transportkette auf welchen vorherigen folgt, sondern auch welche Art von Transformation jeder Transportserver durchzuführen hat.

Gemäß den vorherigen Ausführungen können die Daten in eine virtuelle Maschine integriert werden. Weiterhin kann eine virtuelle Maschine auch ein statisches Bild und/oder eine Videosequenz sein, die die Daten umfassen oder die die Daten selbst sind. Es kann somit mit Bezug auf die vorher genannten Wandlungen auch vorgesehen sein, dass im Rahmen dieser Wandlungen ein Bild oder ein Film während des Transports geändert wird.

Die virtuelle Maschine kann weiterhin z.B. eine Turingmaschine oder eine Kellermaschine sein.

Eine virtuelle Maschine der erfindungsgemäßen Art kann eine selbständige Maschine ohne Beeinflussung von außen sein oder eine, die mittels wenigstens einem Parameter von Außen z.B. an Schnittstellen der virtuellen Maschine gesteuert bzw. beeinflusst werden kann. Dabei kann es vorgesehen sein, dass eine mögliche Signalisierung einer Beeinflussung / Manipulation der virtuellen Maschine durchgeführt wird, z.B. wenn über eine solche Schnittstelle auf die virtuelle Maschine zugegriffen wird.

Dabei kann eine virtuelle Maschine in einer besonderen Ausführungsform vollständig von der Außenwelt abgeschottet und/oder von äußeren Prozesse nicht beeinflussbar sein, z.B. dadurch dass ein Anhalten und/oder mögliche Beeinflussung von Außen z.B. durch weitere Daten oder den Versuch eines Datenabgriffs, die virtuelle Maschine intern eine, insbesondere später prüfbare Signalisierung z.B. einen Triggerpunkt setzt und/oder sich sofort vernichtet, oder dass sich das Programm der virtuellen Maschine löscht und/oder überschreibt und/oder mit zufälligen Daten beschrieben wird und/oder als gelöscht oder inaktiviert bzw. manipuliert gekennzeichnet wird.

Hierbei kann in einer besonderen Ausführungsform die virtuelle Maschine ohne Steuerinformation an den Absender vernichtet werden. Erst durch ein überschreiten einer Zeit, Zeitlimit am Ende der Kommunikationskette vom Startserver zum Zielserver über die Transportserver kann eine eine Steuerinformation an den Zielserver gegeben werden.

In einer weiteren Ausführungsform können die Daten einen Code und/oder ein ausführbaren Code, ein interpretierter Code, ein Programm und /oder zeitabhängige Daten und/oder zeitabhängiger Content sein. Dabei können die Daten eine Transformation in einem abgeschlossenen Rahmen z.B. der virtuellen Maschine, und/oder virtuellen Datenbank und/oder virtuellen Speicher erfahren. Die Daten die z.B. in einem Bitstrom vorliegen, können transformiert werden z.B. in mindestens ein Schemata der Form und/oder Funktion s1,s2,s3,....sn, hier zum Beispiel x,y-Form (für ein Bild) und/oder in x,y,z-Form (hier für ein Video), d.h. auf die Daten kann eine 2- oder 3- oder mehrdimensionale Transformation angewendet werden. Praktisch kann dies bedeuten, dass die Daten ein sich wandelndes Bild oder einen wandelnden Film bilden.

Zum Transformieren der Daten kann als Parameter auch mindestens ein Kommunikationsparameter vorgesehen sein, wie z.B. CLI, HLR, IP-Adresse, Kommunikationsstart, Kommunikationszeit, Norm-Zeit z.B. GMT.

In einer weiteren besonderen Anwendung wird die Zeit als Grenzparameter für die virtuelle Maschine und/oder Datei eingesetzt. Hierbei kann es beispielhaft vorgesehen sein, dass die Daten als ein Content, z.B. ein Bild , x,y-Form, das sich mit der Zeit verändert, oder beispielsweise als ein Film und/oder mittels mathematischer Funktion F Funktionswerte berechnet werden, wobei die Funktion F z.B. von außen beeinflussbare Parameter enthält.

So ist es z.B. möglich anhand des Endbildes, des Endfilmes oder der Endfunktionswerte zu erkennen, wo und wann eine Beeinflussung stattgefunden hat. Ab einem Triggerpunkt z.B. ab einem bestimmten Veränderungspunkt des Urbildes, Urfilm oder Urfunktion, kann die virtuelle Maschine veranlasst werden, weitere Aktionen anzustoßen, bis zu einem Löschen der Daten und/oder der virtuellen Maschine.

Beispielsweise kann angenommen werden, dass ein Datenpunkt A vorliegt, der übertragen werden soll. Als virtuelle Maschine oder in einer virtuellen Maschine wird der Datenpunkt A einer Transformation, z.B. mit der mathematischen Funktion GF (z.B. Geradengleichung) unterzogen und die Funktion "A mal die Zeit t plus ein B" ausgeführt, wobei die Variable B ein Zähler der Zugriffe, z.B. Schnittstellenzugriffe auf die virtuelle Maschine von Außen sein kann. Erfolgte kein Angriff auf die Daten der virtuelle Maschine, kommt als Daten am Ende der Übertragungskette ein Graph heraus mit der variablen Zeit t und das Punkt-Ergebnis GF von t an, mit dem Datenpunkt A gleich GF dividiert durch die Zeit t. Bei einem Angriff, Zugriff auf die virtuelle Maschine an der Schnittstelle S zum Zeitpunkt ts hat der Graph am Zeitpunkt ts einen Sprung, insbesondere da die Variable B aufgrund des Zugriffes hochgezählt wurde.

Ist ein oder sind zu viele Zugriffe, z.B. Sprungstellen vorhanden, kann beispielhaft sich die virtuelle Maschine selbst löschen oder weitere Aktionen gestartet werden z.B. Aufforderung zum wiederholten Senden der Daten.

In einer besonderen Anwendung kann so als Ergebnis ein virtueller Film berechnet werden, der je nach Beeinflussung ein anderes Ergebnis hat, z.B. unterschiedliche Zeitlängen, Zeitpunkte, Farbpunkte, Pixellöschungen.

Ein Ausführungsbeispiel der Erfindung ist in der nachfolgenden Figur beschrieben.

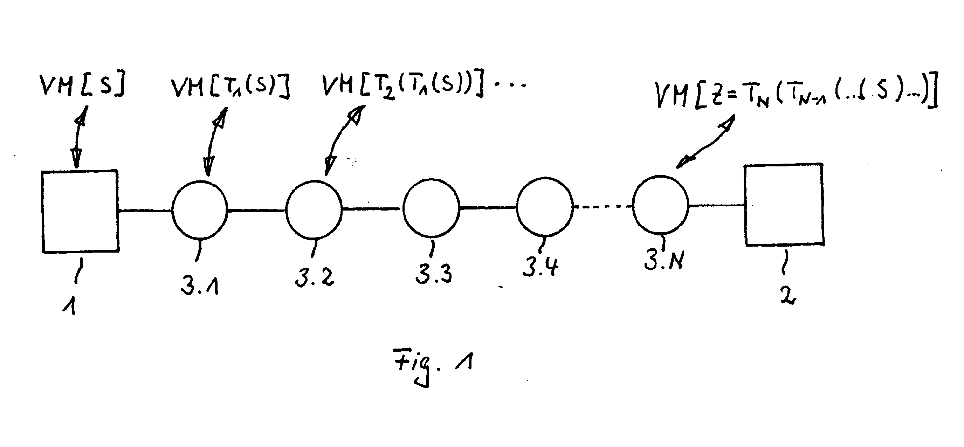

Die Figur 1 symbolisiert schematisch einen Datentransfer von einem Startserver 1 zu einem Zielserver 2 über eine Vielzahl von Transportservern 3, von denen grundsätzlich eine beliebige Anzahl vorgesehen sein kann. Sämtliche dieser vorgenannten Server sind in ein Telekommunikationsnetzwerk integriert, entweder als interne Server oder als zumindest an das Telekommunikationsnetzwerk angeschlossene externe Server, wie beispielsweise die Start- und Zielserver, die jeweils die Endgeräte darstellen können.

Gemäß der hier beschriebenen Ausführungsform ist es vorgesehen, dass in dem Startserver 1 eine virtuelle Maschine VM generiert wird, wobei in diese virtuelle Maschine VM als zu übertragende Daten Startdaten S integriert werden. Der gesamte zu übertragende Datencontainer ist demnach symbolisiert durch VM[S]. Dieser Datencontainer umfassend die virtuelle Maschine mit den Startdaten S wird vom Startserver 1 auf den Transportweg zum Zielserver 2 geschickt, wobei diese virtuelle Maschine als erstes vom Transportserver 3.1 empfangen wird und ausgeführt wird. Hierbei ist es erfindungsgemäß vorgesehen, dass während der Ausführungszeit der virtuellen Maschine eine erste Transformation T1 ausgeführt wird, die unmittelbar auf die Startdaten S wirkt. Zum Ende dieser ersten Teiltransformation wird demnach der gesamte Datencontainer repräsentiert durch VM[T1(S)].

Die virtuelle Maschine wird vor dem Weitertransport zu dem nächsten Transportserver 3.2 angehalten und nicht abgebrochen, was bedeutet, dass die virtuelle Maschine in ihrem am Ende der Ausführungszeit durch den ersten Transportserver definierten Zustand verbleibt und nach Empfang durch den zweiten Transportserver 3.2 ausgehend von diesem zuvor gesetzten Zustand weiter ausgeführt wird. Der nächste Transportserver 3.2 vollzieht während seiner Ausführungszeit eine zweite Teiltransformation T2, die nunmehr auf die bereits in der ersten Teiltransformation geänderten Startdaten wirkt, so dass der Datencontainer am Ende der Ausführungszeit repräsentiert wird durch VM[T2(T1(S))], wenn die zweite Transformation auf die erste wirkt oder alternativ durch VM[T2(S)], wenn die zweite Transformation die erste fortführt.

Der Transportweg vollzieht sich in dieser Weise weiter, wobei jeder der Transportserver die virtuelle Maschine lediglich anhält, so dass die virtuelle Maschine von dem nächsten Transportserver in der Übertragungswegkette der einzelnen Transportserver weiter ausgeführt wird, bis dass entweder am letzten Transportserver 3.N die letzte Transformation TN ausgeführt wird, die auf alle vorherigen Transformationen wirkt bzw. alle vorherigen Transformationen fortführt und demnach die Zieldaten Z letztendlich generiert, so dass durch den Zielserver 2 die virtuelle Maschine bzw. der Datencontainer in dem Zustand VM[Z] empfangen wird.

In einer alternativen Ausführung kann es auch vorgesehen sein, dass auch der Zielserver 2 noch einen letzten Transformationsschritt TN plus 1 ausführt und demnach die Zieldaten erst durch die letzte Transformation am Zielserver generiert werden, was den weiteren Vorteil mit sich bringt, dass das Ergebnis des letzten Transformationsschrittes nicht weiter kommuniziert werden muss und somit keinerlei Angriffsmöglichkeiten von außen auf das Ergebnis dieser letzten Transformation gegeben ist.

Erkennbar wird hier allgemein der Vorteil des erfindungsgemäßen Verfahrens, dass während des Transportwegs über die einzelnen Transportserver 3.1 - 3.N zu keinem Zeitpunkt Zieldaten aus der virtuellen Maschine abgreifbar waren, da diese erst im letzten Transformationsschritt, d.h. entweder beim letzten Transportserver oder beim Zielserver 2 entstehen. Sollte demnach durch einen Missbrauch durch eine nicht berechtigte dritte Person ein Abgriff der Daten aus der virtuellen Maschine während des Transportwegs erfolgen, so ist dies unkritisch, da diese Daten nicht nutzbar sind für die Belange der unbefugten Person.

Um darüber hinaus sicher zu stellen, dass seitens einer unbefugten Person eine während des Transportwegs abgegriffene virtuelle Maschine nicht schlicht weiter ausgeführt wird, um zum letzten Transformationsergebnis zu kommen, ist es erfindungsgemäß vorgesehen, dass die Art der Transformation, die durchzuführen ist, nicht in der transportierten virtuellen Maschine selbst gespeichert ist, sondern längs des Transportwegs in jedem der einzelnen Transportserver gespeichert zur Verfügung steht.

So fehlt die Art der Transformation selbst bei einem missbräuchlichen Datenabgriff in der dann abgegriffenen virtuellen Maschine, so dass die noch fehlenden Transformationen nicht ausgeführt werden können, da die vorgesehene Ausführung dieser Transformationen zwingend bedingt, dass die virtuelle Maschine längs des in besonders bevorzugter Ausführungsform vordefinierten Transportwegs erfolgt. Bei einem solchen vordefinierten Transportweg kann es vorgesehen sein, dass vorgeschrieben ist, über welche einzelnen Transportserver 3.1 - 3.N der Weg des Transportes zwischen Start- und Zielserver erfolgt, so dass dieser Transportweg nicht beliebig innerhalb des Telekommunikationsnetzwerkes sein kann.

## Patentansprüche

1. Verfahren zur Übertragung von Daten von einem Startserver (1) zu einem Zielserver (2) über mehrere Transportserver (3.1,..., 3.N) eines Telekommunikationsnetzwerks, wobei , die zu übertragenden Daten im Startserver (1) in eine virtuelle Maschine (VM) integriert werden und die virtuelle Maschine (VM) zusammen mit den darin integrierten Daten über die Transportserver (3.1,..., 3.N) bis zum Zielserver (2) transportiert wird, wobei während des Transports in zumindest einem Transportserver (3.1,..., 3.N) die virtuelle Maschine (VM) zumindest zeitweise mittels der Hardware des aktuellen Transportservers (3.1,..., 3.N) ausgeführt und nach der Ausführung angehalten oder abgebrochen und weitergesendet wird bis dass die virtuelle Maschine (VM) vom Zielserver (2) empfangen wird und wobei als zu übertragende Daten mit dem Startserver (1) Startdaten (S) in die virtuelle Maschine integriert werden, die durch die virtuelle Maschine (VM) in einem Wandlungsprozeß in Zieldaten (Z) gewandelt werden, wobei auf jedem der Transportserver (3.1,..., 3.N), der die virtuelle Maschine ausführt, während der Ausführungszeit der virtuellen Maschine (VM) der Wandlungsprozeß teilweise ausgeführt wird, **dadurch gekennzeichnet, dass** jeder Transportserver über die durchzuführende Wandlung informiert wird parallel zur Versendung oder vor der Versendung der virtuellen Maschine (VM) mittels einer Liste, in welcher für jeden Server die Art der Wandlung definiert ist.

2. Verfahren nach Anspruch 1, **dadurch gekennzeichnet, dass** der Wandlungsprozeß erst mit Empfang oder nach Empfang der virtuellen Maschine (VM) beim Zielserver (2) abgeschlossen wird / ist.

3. Verfahren nach einem der vorherigen Ansprüche, **dadurch gekennzeichnet, dass** mit dem Zielserver die empfangenen Daten, die aus den ursprünglichen während des Transportes gewandelt wurden, zurückgewandelt werden und so die ursprünglichen Daten rekonstruiert werden anhand einer Information über die durchzuführende Rückwandlung die der Zielserver durch separaten Empfang dieser Information vom Startserver erhält.

4. Verfahren nach einem der vorherigen Ansprüche, **dadurch gekennzeichnet, dass** die virtuelle Maschine (VM) bereits während ihrer Ausführungszeit auf einem Transportserver (3.1,..., 3.N) die mit ihr übertragenen Daten auf Unversehrtheit überprüft mittels eines in der virtuellen Maschine (VM) ausgeführten Prüfprogramms.

5. Verfahren nach einem der vorherigen Ansprüche, **dadurch gekennzeichnet, dass** das unabhängig zur Übertragung der virtuellen Maschine (VM) an den Zielserver (2) eine Zeitinformation über die während der Übertragung der virtuellen Maschine (VM) zu erwartende Gesamtausführungszeit und/oder Gesamtübertragungszeit übermittelt wird und der Zielserver die Gesamtausführungszeit und/oder Gesamtübertragungszeit der virtuellen Maschine (VM) nach deren Empfang mit der erhaltenen Zeitinformation vergleicht und/oder die Zeitinformation zur Rekonstruktion und/oder Transformation der Daten als Parameter nutzt.

6. Verfahren nach einem der vorherigen Ansprüche, **dadurch gekennzeichnet, dass** ein Transportserver (3.1,..., 3.N) aus einer der virtuellen Maschine (VM) beigefügten oder parallel oder zuvor versendeten Serverliste eine Information darüber entnimmt, an welchen nächsten Transportserver (3.1,..., 3.N) die virtuelle Maschine (VM) weiterzuleiten ist.

7. System zur Übertragung von Daten umfassend einen Startserver (1) und einen Zielserver (2) zwischen denen die Daten über mehrere Transportserver (3.1,..., 3.N) eines Telekommunikationsnetzwerks, übermittelbar sind, wobei der Startserver (1) eingerichtet ist, die zu übertragenden Daten in eine virtuelle Maschine (VM) zu integrieren und hierfür zuvor die virtuelle Maschine (VM) zu einem Ursprungszeitpunkt zu generieren und die virtuelle Maschine (VM) zusammen mit den darin integrierten Daten für einen Transport über die Transportserver (3.1,..., 3..N) bis zum Zielserver (2) zu versenden, wobei wenigstens einer der Transportserver (3.1,..., 3.N) eingerichtet ist, während des Transports die virtuelle Maschine (VM) zumindest zeitweise mittels der Hardware des aktuellen Transportservers (3.1,..., 3.N) auszuführen und nach der Ausführung anzuhalten oder abzubrechen und weiterzusenden bis zum Empfang der virtuellen Maschine (VM) beim Zielserver (2) und der Startserver (1) eingerichtet ist als zu übertragende Daten Startdaten (S) in die virtuelle Maschine zu integrieren und die virtuelle Maschine (VM) eingerichtet ist, in einem Wandlungsprozeß die Startdaten (S) in Zieldaten (Z) zu wandeln, wobei jeder der Transportserver (3.1,..., 3.N), der die virtuelle Maschine ausführt, eingerichtet ist, während der Ausführungszeit der virtuellen Maschine (VM) den Wandlungsprozeß teilweise auszuführen, **dadurch gekennzeichnet, dass** jeder Transportserver über die durchzuführende Wandlung informiert ist durch eine parallel zur Versendung oder vor der Versendung der virtuellen Maschine (VM) versendete Liste, in welcher für jeden Server die Art der Wandlung definiert ist.

## Claims

1. Method for transporting data from a start server (1) to a destination server (2) via a number of transport servers (3.1, ..., 3.N) of a telecommunication network, wherein the data to be transported are integrated into a virtual machine (VM) in the start server (1) and the virtual machine (VM), together with the data integrated therein, is transported via the transport servers (3.1, ..., 3.N) to the destination server (2), wherein, during the transport, the virtual machine (VM) is executed at least temporarily by means of the hardware of the current transport server (3.1, ..., 3.N) in at least one transport server (3.1, ..., 3.N) and, after the execution, is stopped or aborted and forwarded until the virtual machine (VM) is received by the destination server (2) and wherein, as data to be transported, start data (S) are integrated by means of the start server (1) into the virtual machine which are converted by the virtual machine (VM) into destination data (Z) in a conversion process, wherein, in each of the transport servers (3.1, ..., 3.N) which executes the virtual machine, the conversion process is executed partially during the execution time of the virtual machine (VM), **characterized in that** each transport server is informed about the conversion to be performed, and parallel to the sending or before the sending of the virtual machine (VM) by means of a list in which the type of conversion is defined for each server.

2. Method according to Claim 1, **characterized in that** the conversion process is only concluded with the reception or after reception of the virtual machine (VM) at the destination server (2).

3. Method according to one of the preceding claims, **characterized in that** the received data which were converted from the original data during the transport are reconverted by means of the destination server and thus the original data are reconstructed by means of an information item about the reconversion to be performed which the destination server receives by separate reception of this information item from the start server.

4. Method according to one of the preceding claims, **characterized in that** the virtual machine (VM) checks the data transmitted with it for intactness by means of a test programme executed in the virtual machine (VM) already during its execution time on a transport server (3.1, ..., 3.N).

5. Method according to one of the preceding claims, **characterized in that**, independently of the transporting of the virtual machine (VM), a time information item about the total execution time and/or total transporting time to be expected during the transporting of the virtual machine (VM) is conveyed to the destination server (2) and the destination server compares the total execution time and/or total transporting time of the virtual machine (VM) after its reception with the time information item received and/or uses the time information item as parameter for reconstructing and/or transforming the data.

6. Method according to one of the preceding claims, **characterized in that** a transport server (3.1, ..., 3.N) takes from a server list attached to the virtual machine (VM) or sent out in parallel or previously an information item about the next transport server (3.1, ..., 3.N) to which the virtual machine (VM) is to be forwarded.

7. System for transporting data comprising a start server (1) and a destination server (2) between which the data can be conveyed via a number of transport servers (3.1, ..., 3.N) of a telecommunication network, wherein the start server (1) is configured for integrating the data to be transported into a virtual machine (VM) and for this purpose, generating the virtual machine (VM) first at a time of origin and sending out the virtual machine (VM) together with the data integrated therein for a transportation via the transport servers (3.1, ..., 3.N) to the destination server (2), wherein at least one of the transport servers (3.1, ..., 3.N) is configured for executing the virtual machine (VM) during the transportation at least temporarily by means of the hardware of the current transport server (3.1, ..., 3.N) and stopping it or aborting it and forwarding it up to reception of the virtual machine (VM) at the destination server (2) after the execution and the start server (1) is configured to integrate as data to be transported start data (S) into the virtual machine and the virtual machine (VM) is configured to convert the start data (S) into destination data (Z) in a conversion process, wherein each of the transport servers (3.1, ..., 3.N), which executes the virtual machine, is configured to execute the conversion process temporarily during the execution time of the virtual machine (VM), **characterized in that** each transport server is informed about the conversion to be performed by a list sent out in parallel to the sending out or before the sending out of the virtual machine (VM), in which the type of conversion is defined for each server.

## Revendications

1. Procédé pour la transmission de données à partir d'un serveur de départ (1) vers un serveur d'arrivée (2) par l'intermédiaire de plusieurs serveurs de transport (3.1, ..., 3.N) d'un réseau de télécommunications, dans lequel les données à transmettre localisées dans le serveur de départ (1) seront intégrées dans une machine virtuelle (VM) et la machine virtuelle (VM) accompagnée des données qui y sont intégrées est transportée par l'intermédiaire des serveurs de transport (3.1, ..., 3.N) jusqu'au serveur d'arrivée (2), dans lequel pendant le transport, dans au moins un serveur de transport (3.1, ..., 3.N), la machine virtuelle (VM) s'exécute au moins par intermittence au moyen du matériel du serveur de transport (3.1, ..., 3.N) courant et elle est arrêtée ou interrompue après exécution et transférée jusqu'à ce que la machine virtuelle (VM) soit reçue par le serveur d'arrivée (2) et dans lequel des données de départ (S), intégrées dans la machine virtuelle en tant que données à transmettre avec le serveur de départ (1), sont transformées par la machine virtuelle (VM) en données d'arrivée (Z) dans un processus de transformation, dans lequel sur chacun des serveurs de transport (3.1, ..., 3.N) exécutant la machine virtuelle, le processus de transformation s'exécute partiellement pendant la durée d'exécution de la machine virtuelle (VM), **caractérisé en ce que** chaque serveur de transport est informé de la transformation à exécuter par l'envoi d'une liste envoyée en parallèle ou avant l'envoi de la machine virtuelle (VM) dans laquelle le type de transformation est défini pour chaque serveur.

2. Procédé selon la revendication 1, **caractérisé en ce que** le processus de transformation ne s'achève qu'avec la réception ou après la réception de la machine virtuelle (VM) par le serveur d'arrivée (2).

3. Procédé selon une des revendications précédentes, **caractérisé en ce qu'**avec le serveur d'arrivée, les données reçues qui ont été transformées pendant le transport à partir des données originelles, subissent la transformation inverse reconstruisant ainsi les données originelles à l'aide d'une information concernant la transformation inverse à exécuter que le serveur d'arrivée obtient du serveur de départ par réception séparée de cette information.

4. Procédé selon une des revendications précédentes, **caractérisé en ce que** la machine virtuelle (VM) contrôle déjà pendant sa durée d'exécution sur un serveur de transport (3.1, ..., 3.N), les données transmises avec elle en ce qui concerne leur intégrité au moyen d'un programme de contrôle exécuté dans la machine virtuelle (VM).

5. Procédé selon une des revendications précédentes, **caractérisé en ce qu'**indépendamment de la transmission de la machine virtuelle (VM) vers le serveur d'arrivée (2), une information temporelle est communiquée concernant la durée totale d'exécution et/ou la durée totale de transmission prévue pendant la transmission de la machine virtuelle (VM) et le serveur d'arrivée compare la durée totale d'exécution et/ou la durée totale de transmission de la machine virtuelle (VM) après sa réception avec l'information temporelle, et/ou utilise l'information temporelle comme paramètre pour la reconstruction et/ou la transformation des données.

6. Procédé selon une des revendications précédentes, **caractérisé en ce que** le serveur de transport (3.1, ..., 3.N) prélève une information d'une liste de serveurs annexée ou envoyée en parallèle ou précédemment par une des machines virtuelles (VM), concernant le serveur de transport suivant (3.1, ..., 3.N) auquel il faut transférer la machine virtuelle (VM).

7. Système pour la transmission de données comprenant un serveur de départ (1) et un serveur d'arrivée (2) entre lesquels les données peuvent être transmises par l'intermédiaire de plusieurs serveurs de transport (3.1, ..., 3.N) d'un réseau de télécommunications, dans lequel le serveur de départ (1) est arrangé de manière à intégrer les données à transmettre dans une machine virtuelle (VM) et à générer à cet effet préalablement la machine virtuelle (VM) à un instant d'origine et à envoyer la machine virtuelle (VM) accompagnée des données qui y sont intégrées pour un transport par l'intermédiaire des serveurs de transport (3.1, ..., 3.N) jusqu'au serveur d'arrivée (2), dans lequel pendant le transport, au moins un serveur de transport (3.1, ..., 3.N) est arrangé pour exécuter la machine virtuelle (VM) au moins par intermittence au moyen du matériel du serveur de transport (3.1, ..., 3.N) courant et elle est arrêtée ou interrompue après exécution et transférée jusqu'à la réception de la machine virtuelle (VM) par le serveur d'arrivée (2) et le serveur de départ (1) est arrangé pour intégrer des données de départ (S) dans la machine virtuelle en tant que données à transmettre et la machine virtuelle (VM) est arrangée pour transformer les données de départ (S) en données d'arrivée (Z) dans un processus de transformation, dans lequel chacun des serveurs de transport (3.1, ..., 3.N) exécutant la machine virtuelle est arrangé pour exécuter partiellement le processus de transformation pendant la durée d'exécution de la machine virtuelle (VM), **caractérisé en ce que** chaque serveur de transport est informé de la transformation à exécuter par l'envoi d'une liste envoyée en parallèle ou avant l'envoi de la machine virtuelle (VM) dans laquelle le type de transformation est défini pour chaque serveur.
